# EUROPÄISCHE PATENTSCHRIFT

(11) **EP 2 025 029 B1**
(45) Veröffentlichungstag und Bekanntmachung des Hinweises auf die Patenterteilung: **14.12.2011**
(21) Anmeldenummer: 07710510.4
(22) Anmeldetag: 13.03.2007
(51) Int. Cl.: H01M 8/04

(54) **KÜHLSYSTEM FÜR EINE BRENNSTOFFZELLE**
COOLING SYSTEM FOR A FUEL CELL
SYSTÈME DE REFROIDISSEMENT POUR PILE À COMBUSTIBLE

(30) Priorität: 05.05.2006 AT 7832006
(43) Veröffentlichungstag der Anmeldung: 18.02.2009
(73) Patentinhaber: Fronius International GmbH, 4643 Pettenbach (AT)
(72) Erfinder: BUCHINGER, Martin, A-4600 Wels (AT); GONSIOR, Alexander, A-4052 Ansfelden (AT); GRIESBAUM, Mathias, A-4600 Thalheim/Wels (AT)
(74) Vertreter: Heger, Georg
(86) Internationale Anmeldenummer: PCT/AT2007/000120
(87) Internationale Veröffentlichungsnummer: WO 2007/128008

(56) Entgegenhaltungen:
- EP-A- 1 343 214
- JP-A- 9 019 678
- JP-A- 2001 035 519
- JP-A- 2004 127 620
- JP-A- 2005 032 654
- US-A1- 2005 077 252
- US-A1- 2005 115 884

## Beschreibung

Die Erfindung betrifft ein Kühlsystem für eine Brennstoffzelle mit zumindest einem Kühler, einem Thermostat, einer Pumpe zur Beförderung eines Kühlmittels in einem Kühlkreislauf, und mit einem Ausgleichsbehälter, wobei zur Redaktion der elektrischen Leitfähigkeit des Kühlmittels ein Deionisierharz vorgesehen ist, welches in dem Ausgleichsbehälter angeordnet ist, welcher Ausgleichsbehälter über zumindest eine Leitung mit dem Kühlkreislauf verbunden ist.

Die Erfindung bezieht sich auf ein kühlsystem einer Brennstoffzelle, wobei die elektrische Leitfähigkeit des im Kühlsystem befindlichen Kühlmittels möglichst gering (<50 µS/cm) gehalten werden muss, um Nebenreaktionen im Kühlkreis der Brennstoffzelle zu unterbinden.

Aus der DE 699 25 291 T2 ist ein Kühlsystem bekannt, welches zum Kühlen einer Brennstoffzelle ein flüssiges Kühlmittel beinhaltet. Die hierfür verwendeten Kühlmittel weisen etwa eine elektrische Leitfähigkeit von weniger als 50 µS/cm auf. Die Leitfähigkeit von Kühlmitteln in Brennstoffzellen soll jedoch möglichst gering gehalten werden, um unerwünschte Nebenreaktionen wie die Korrosion im Külshystem zu vermeiden. Um eine bevorzugte Leitfähigkeit von weniger als 5 µS/cm zu erreichen, wird das Kühlmittel in entsprechend kurzen Wartungsintervallen getauscht oder es werden Mittel zum Aufrechterhalten der Reinheit des Kühlmittels eingesetzt.

Ein bevorzugtes Mittel zum Aufrechterhalten der Reinheit des Kühlmittels ist eine Ionenaustauschharzeinheit, in der ein Deionisierharz beinhaltet ist, welche in den Kreislauf des Kühlsystems eingebaut wird. Und zwar derart, dass das Kühlmittel durch das Deionisierharz in der Ionenaustauschharzeinheit mit einer entsprechend hohen Pumpleistung gepresst wird. Dadurch kann das Deionisierharz die ionischen Zersetzungsprodukte aus dem Kühlmittel entfernen, wodurch die Leitfähigkeit des Kühlmittels entsprechend gesenkt wird.

Nachteilig ist hierbei, dass die Ionenaustauschharzeinheit in den Kreislauf des Kühlsystems integriert wird, wodurch diese einen Druckverlust bzw. einen hohen Strömungswiderstand für das Kühlmittels verursacht. Damit dieser hohe Strömungswiderstand kompensiert werden kann, muss beispielsweise die Leistung der Pumpe erhöht werden, welche das Kühlmittel im Kreislauf zirkuliert. Somit hat die Pumpe einen erhöhten Stromverbrauch, wodurch sich der Wirkungsgrad des Brennstoffzellensystems reduziert.

Ebenso ist von Nachteil, dass die Ionenaustauschharzeinheit eine zusätzliche Komponente im Kühlsystem darstellt, wodurch die Zahl der potentiellen Leckagestellen im Kühlsystem erhöht wird.

Ein weiterer Nachteil besteht darin, dass für einen Tausch des Deionisierharzes in der Ionenaustauschharzeinheit die Kühlung und somit der Betrieb der Brennstoffzelle unterbrochen werden muss.

Die JP 2003-346845 A beschreibt ein Kühlsystem für eine Brennstoffzelle, wobei das Deionisierharz in einem Ausgleichsbehälter außerhalb des Kühlkreislaufes in einem Bypass angeordnet ist. Zur Beförderung eines Teils des Kühlmittels durch das Deionisierharz sind zusätzliche Pumpen angeordnet, welche den Gesamtwirkungsgrad des Brennstoffzellensystems reduzieren.

Die JP 2005-032654 A beschreibt ebenfalls ein Brennstoffzellensystem, wo unter Zuhilfenahme zusätzlicher Pumpen eine Deionisierung des Kühlmittels stattfindet. Auch hier reduzieren die für die Deionisierung notwendigen zusätzlichen Komponenten den Wirkungsgrad des Brennstoffzellensystems.

Die JP 09019678 A beschreibt einen Behälter zur Reinigung von Wasser über eine Filteranordnung, welche den Behälter in zwei Teile trennt. Dieser Behälter betrifft lediglich das Prinzip der Unterteilung eines Behälters über eine Filterwand ohne im Detail auf die Problematik eines Kühlsystems für eine Brennstoffzelle einzugehen.

Die US 2005/0115884 A1 betrifft einen Ionenaustauschfilter, welcher einen Kühlkreislauf mit einer Pumpe aufweist, wobei die Ionenaustauscheinheit in einem Bypass zum Kühlkreislauf angeordnet ist. Auch hier muss die Pumpe entsprechend mehr Leistung erbringen um das Kühlmittel durch die Ionenaustauscheinheit zu transportieren.

Schließlich zeigt die EP 1 343 214 A1 eine Brennstoffzelle, welche für eine bessere Inbetriebnahme Mittel zur Wärmekapazität aufweist. Das Kühlsystem umfasst eine Kühlleitung, eine Zirkulationspumpe und einen Behälter für die Kühlflüssigkeit. Der Zusatz eines Deionisierharzes wird nicht erwähnt.

Die Aufgabe der Erfindung liegt daher in der Schaffung eines Kühlsystems, bei dem die elektrisch Leitfähigkeit des Kühlmittels einfach und kostengünstig kontinuierlich gering gehalten wird.

Die Aufgabe der Erfindung wird dadurch gelöst, dass das Deionisierharz in einem Behälter aus einem für das Kühlmittel durchlässigen Material in einem Innenraum des Ausgleichsbehälters derart angeordnet ist, dass das Deionisierharz zumindest teilweise in das Kühlmittel getaucht ist, die Leitung, welche den Ausgleichsbehälter und den Kühlkreislauf verbindet, frei zugänglich ist, so dass zwischen Ausgleichsbehälter und Kühlkreislauf eine permanente Verbindung vorhanden ist, so dass das Deionisierharz die elektrische Leitfähigkeit des Kühlmittels durch Diffusionsvorgänge zwischen dem Deionisierharz und dem Kühlmittel reduziert. Vorteilhaft ist hierbei, dass durch das Deionisierharz im Ausgleichsbehälter ein zusätzlicher Druckverlust bzw. ein zusätzlicher Strömungswiderstand im Kühlkreislauf verhindert wird, ohne die Wirkung des Deionisierharzes zu beeinträchtigen. Somit ist lediglich eine geringe Leistung der Pumpe erforderlich, wodurch der Wirkungsgrad des Brennstoffzellensystems erhöht wird, da der Eigenenergieverbrauch der Brennstoffzelle gesenkt wird. Die Deionisation des Kühlmittels wird in vorteilhafter Weise dadurch erreicht, dass durch das Deionisierharz das Kühlmittel 1 im Ausgleichsbehälter eine wesentlich geringere Konzentration an leitfähigen Ionen aufweist, als das Kühlmittel im Kühlkreislauf. Daraus resultiert, dass diese Konzentratlonsunterschiede durch Diffusionsvorgänge ausgeglichen werden, wodurch die Leitfähigkeit des Kühlmittels über einen wesentlich längeren Zeitraum auf dem erforderlichen Niveau gehalten wird. Ebenso ist von Vorteil, dass dadurch zumindest eine zusätzliche Komponente für die Deionisation des Kühlmittels im Kühlkreislauf vermieden wird, wodurch die Zahl der potentiellen Leckagestellen bzw. Leckstellen steigen würde. Durch diese Konstruktion wird vermieden, dass der Behälter des Deionisierharzes die Durchrflussmenge der Leitung negativ beeinflusst. Ebenso kann dadurch der Behälter bzw. das Deionisierharz im Behälter einfach im Betrieb der Brennstoffzelle gewechselt werden ohne die Kühlung und somit den Betrieb der Brennstoffzelle zu unterbrechen.

Wenn die Leitung an einer Saugseite der Pumpe des Kühlkreislaufes angeschlossen ist, wird in vorteilhafter Weise erreicht, dass durch, einen geringeren Druck auf der Saugseite, im Vergleich zu der Druckseite der Pumpe, der ausgleich der Konzentrationsunterschiede verbessert wird.

Wenn der Behälter durch einen Schraubverschluss einer Einfüllöffnung des Ausgleichsbehälters befestigt ist, kann dieser besonders rasch und einfach gewechselt werden.

Gemäß einem weiteren Merkmal der Erfindung ist zumindest eine Entgasungsleitung vorgesehen, welche den Kühlkreislauf mit dem Ausgleichbehälter verbindet.

Diese zumindest eine Entgasungsleitung bildet zusammen mit der Leitung und dem Ausgleichsbhälter einen Sekundärkreislauf, wodurch der Ausgleich der Konzentrationsunterschiede zwischen dem Kühlmittel im Ausgleichsbehälter und dem Kühlmittel im Kühlkreislauf beschleunigt wird.

Durch den über die Entgasungsleitung gebildeten Sekundärkreislauf wird ein Teilstrom des Kühlmittels in den Ausgleichbehälter befördert. Somit bewirkt der Sekundärkreislauf zusätzlich zu den Diffusionsvorgängen eine Vermischung des Kühlmittels im Ausgleichsbehälter, welches eine sehr geringe Konzentration an leitfähigen Ionen aufweist, mit dem Kühlmittel im kühlkreislauf, welches eine höhere Konzentration an leitfähigen Ionen aufweist, wodurch die Beschleunigung des Ausgleichs der konzentrationsunterschiede erreicht wird.

Über eine im Ausgleichsbehälter vorgesehene Überdrucksicherungseinrichtung oder Belüftungseinrichtung, insbesondere ein Überdruckventil, können die über die Entgasungsleitung aus dem Kühlkreislauf gelieferten und im Ausgleichsbehälter angesammelten Gase abgeführt werden, Ebenso kann ein durch Ausdehnung des Kühlmittels entsehender Überdruck im Ausgleichsbehälter ausgeglichen werden.

Vorteilhafterweise besteht das Dionisierharz aus basischem Anionenharzen und/oder Mischbettharzen.

Det Behälter für das Deionislerharz besteht vorzugsweise aus einem für das Kühlmittel durchlässigen Material, welches insbesondere auch gegenüber dem Kühlmittel beständig ist, insbesondere aus Polypropylen oder Polyethylen. Dadurch können dem Kühlmittel kontinuierlich die Anionen und Kationen, welche die Leitfähigkeit verursachen, entzogen werden und es erfolgt eine kontinuierliche Deionisation des Kühlmittels. Ebenso ist der Behälter flexibel in Größe und Form auf die Anforderungen des Ausgleichsbehälters bzw. des Kühlsystems anpassbar.

Die vorliegende Erfindung wird anhand der beigefügten, schematisehen Zeichnungen näher erläutert.

Darin zeigen:
- Fig. 1: den schematischen Aufbau einer Brennstoffzelle;
- Fig.: 2 den schematischen Aufbau einer Brennstoffzelle mit: dem erfindungsgemäßen kühlsystem; und
- Fig. 3: den schematischen Aufbau einer Brennstoffzelle mit einer weiteren Variante des erfindungsgemäßen Kühlsystems.

Einführend wird festgehalten, dass gleiche Teile des Ausführungsbeispiels mit gleichen Bezugszeichen versehen werden.

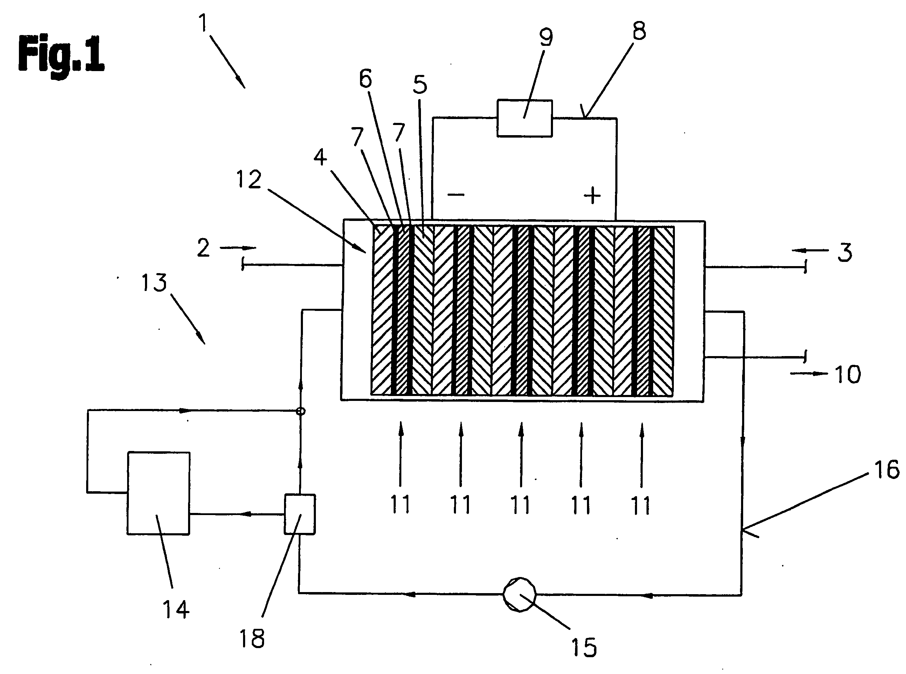

In Fig. 1 ist eine Brennstoffzelle 1 zur Erzeugung von Strom aus Wasserstoff 2 und Sauerstoff 3 bzw. Luft dargestellt.

Im Allgemeinen sind Brennstoffzellen 1 elektrochemische Stromerzeuger, die direkt aus einer chemischen Reaktion elektrischen Strom erzeugen. Dies erfolgt durch Umkehrung der elektrolytischen Zersetzung von Wasser, bei der durch einen Stromfluss die Gase Wasserstoff 2 und Sauerstoff 3 gebildet werden.

In der Brennstoffzelle 1 reagiert also Wasserstoff 2 mit Sauerstoff 3, wodurch Strom erzeugt wird. Hierzu wird an einer Anode 4 Wasserstoff 2 und an einer Kathode 5 Sauerstoff 3 zugeführt, wobei die Anode 4 und die Kathode 5 durch einen Elektrolyt 6 getrennt sind. Des Weiteren sind die Anode 4 und die Kathode 5 an der Seite zum Elektrolyt 6 mit einem Katalysator 7, meist aus Platin, beschichtet. Dadurch kann der Wasserstoff 2 mit dem Sauerstoff 3 reagieren, wobei dies in zwei getrennten Einzelreaktionen an den beiden Elektroden, der Anode 4 und der Kathode 5, erfolgt.

Der Anode 4 wird Wasserstoff 2 zugeführt, welcher am Katalysator 7 reagiert und sich je ein Wasserstoffmolekül in zwei Wasserstoffatome spaltet. Ein Wasserstoffatom weist zwei Bestandteile, ein negativ geladenes Elektron und ein positiv geladenes Proton, auf. Jedes Wasserstoffatom gibt sein Elektron ab. Die positiv geladenen Protonen diffundieren durch den Elektrolyt 6, welcher für die negativ geladenen Elektronen undurchlässig ist, zur Kathode 5.

An der Kathode 5 wird zeitgleich zum Wasserstoff 2 an der Anode 4 Sauerstoff 3 zugeführt. Die Sauerstoffmoleküle reagieren am Katalysator 7 und teilen sich jeweils in zwei Sauerstoffatome, welche sich an der Kathode 5 ablagern.

Somit sind an der Kathode 5 die positiv geladenen Protonen des Wasserstoffs 2 sowie die Sauerstoffatome, und an der Anode 4 die negativ geladenen Elektronen des Wasserstoffs 2 abgelagert. Dadurch herrscht an der Kathode 5 ein sogenannter Elektronenmangel und an der Anode 4 ein sogenannter Elektronenüberschuss. Daraus resultiert also an der Anode 4 eine negative und an der Kathode 5 eine positive Ladung. Die Anode 4 entspricht also einem Minuspol (-) und die Kathode 5 einem Pluspol (+).

Verbindet man nun die Anode 4 und die Kathode 5 mit einem elektrischen Leiter 8, so wandern die Elektronen aufgrund des Potenzialunterschiedes über den elektrischen Leiter 8 von der Anode 4 zur Kathode 5. Es fließt also elektrischer Gleichstrom über einen an der Leitung 8 angeschlossenen Verbraucher 9. Der Verbraucher 9 kann auch beispielsweise durch eine Batterie, die den produzierten Strom speichert, oder einen Wechselrichter, welcher den produzierten Gleichstrom in Wechselstrom umwandelt, gebildet sein.

Zwei Elektronen, welche über den elektrischen Leiter 8 von der Anode 4 zur Kathode 5 gewandert sind, werden jeweils von einem Sauerstoffatom in der Kathode 5 aufgenommen und werden zu zweifach negativ geladenen Sauerstoff-Ionen. Diese Sauerstoff-Ionen vereinigen sich mit den positiv geladenen Protonen des Wasserstoffs 2, welche durch den Elektrolyt 6 von der Anode 4 auf die Kathode 5 diffundiert sind, zu Wasser 1.0. Das Wasser 1.0 wird als sogenanntes Reaktionsendprodukt an der Kathode 5 ausgeschieden.

In einer Zelle 11 der Brennstoffzelle 1 reagiert also Wasserstoff 2 mit Sauerstoff 3, wodurch Strom erzeugt wird. Eine Zelle 11 wird durch Anode 4, Kathode 5, Elektrolyt 6 und Katalysator 7 gebildet. Eine Verbindung mehrerer Zellen 11 in einer Reihenschaltung wird im Allgemeinen als ein Stack 12 bezeichnet.

Durch die Reaktion von Wasserstoff 2 mit Sauerstoff 3 in den einzelnen Zellen 11 eines Stacks 12 entsteht Wärme, die abgeführt werden muss. Dies erfolgt über ein Kühlsystem 13, das in ihrer einfachsten Form aus einem Kühler 14, einer Pumpe 15 und einem Kühlkreislauf 16 besteht. Dabei pumpt die Pumpe 15 ein im Kühlkreislauf 16 befindliches Kühlmittel 17 durch den Stack 12 der Brennstoffzelle 1, beispielsweise in die Richtung gemäß den Pfeilen. Dadurch entzieht das Kühlmittel 17 dem Stack 1.2 die Wärme, indem die Wärme durch das Kühlmittel 17 aufgenommen wird. Der Kühler 14 im Kühlkreislauf 16 entzieht wiederum dem Kühlmittel 17 die Wärme und gibt diese an die Umgebungsluft ab, sodass das Kühlmittel 17 erneut dem Stack 12 die Wärme entziehen kann. Der Kühlkreislauf 16 kann auch derart geregelt sein, dass das Kühlmittel 17 nur dann den Kühler 14 durchströmt, wenn das Kühlmittel 17 eine gewisse Temperatur aufweist. Diese Regelung erfolgt dementsprechend über ein Thermostat 18.

Da das Kühlsystem 13 einen Bestandteil der Brennstoffzelle 1 bildet, ist es den Spannungen, welche von den Zellen 11 erzeugt werden, ausgesetzt. Somit ist es wichtig, dass kein nennenswerter Stromfluss zwischen den Zellen 11 durch das Kühlmittel 17 auftritt. Als Kühlmittel 17 wird daher beispielsweise voll entsalztes Wasser (VE-Wasser) oder ein Gemisch aus Ethylenglykol und Wasser mit geringer elektrischer Leitfähigkeit verwendet.

Die elektrische Leitfähigkeit des Kühlmittels 17 wird durch den Einsatz eines Deionisierharzes 19, welches beispielsweise aus basischem Anionenharz oder Mischbettharz besteht, reduziert. Das Deionisierharz 19 bewirkt, dass in das Kühlmittel 17 durch diverse Vorgänge (Korrosion, Oxydation,...) abgegebene elektrisch leitende Ionen (Anionen und Kationen) absorbiert werden. Somit kann die Leitfähigkeit des Kühlmittels 17 bevorzugt unter 5 µS/cm gehalten werden, wodurch parasitäre Ströme, die den Wirkungsgrad verschlechtern würden und Nebenreaktionen, die Korrosion im Kühlsystem 13 verursachen würden, vermieden werden.

Beispielsweise wird dabei das Deionisierharz 19, wie aus der DE 699 26 291 T2 bekannt, in eine Ionenaustauschharzeinheit integriert, wobei die Ionenaustauschharzeinheit mit dem Kühlmittel 17 durchströmt wird. Dabei werden dem Kühlmittel 17 die von den Zellen 11 aufgenommenen elektrisch leitenden Ionen (Anionen und Kationen) vom Deionisierharz 19 absorbiert. Somit kann die Leitfähigkeit des Kühlmittels 17 bevorzugt unter 5 µS/cm gehalten werden, wodurch parasitäre Ströme, die den Wirkungsgrad verschlechtern würden, und Nebenreaktionen, die Korrosion im Kühlsystem 13 verursachen würden, vermieden werden.

Erfindungsgemäß ist nun vorgesehen, dass das Deionisierharz 19 in einem Ausgleichsbehälter 20 integriert wird. Hierzu ist der Ausgleichsbehälter 20 über eine Leitung 21 mit dem Kühlkreislauf 16 verbunden. Somit ist das Deionisierharz 19 nicht direkt in den Kühlkreislauf 16 integriert, wodurch dieses auch keinen hohen Strömungswiderstand für das Kühlmittel 17 bewirkt, jedoch somit die Leitfähigkeit des Kühlmittels 17 kontinuierlich gering gehalten wird.

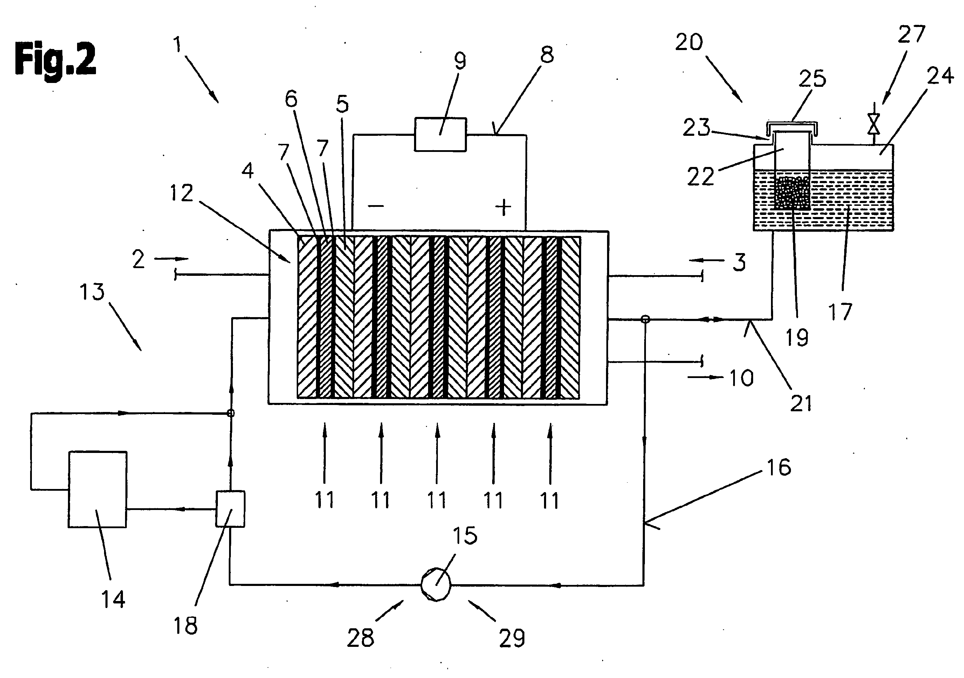

In Fig. 2 ist das erfindungsgemäße Kühlsystem 13 mit dem Ausgleichsbehälter 20 dargestellt. Erfindungsgemäß befindet sich das Deionisierharz 19 im Ausgleichsbehälter 20, wobei das Deionisierharz 19 in einem Behälter 22 bzw. in einen Sack oder Säckchen gefüllt ist. Bevorzugt wird der Behälter 22 im Ausgleichsbehälter 20 derart befestigt, dass der Behälter 22 durch eine Einfüllöffnung 23 des Ausgleichsbehälters 20 in einen Innenraum 24 des Ausgleichsbehälters 20 eingeführt wird. Dabei hat der Behälter 22 an einem Ende einen Vorsprung, durch welchen der Behälter 22 am Rand der Einfüllöffnung 23 aufliegt. Somit ist die Einfüllöffnung 23 beispielsweise durch den Behälter 22 verschlossen. Die Einfüllöffnung 23 kann aber auch mit einem Schraubverschluss 25 verschlossen werden. Wird beispielsweise ein derartiger Schraubverschluss 25 verwendet, kann das Ende des Behälters 22 mit dem Vorsprung offen ausgeführt sein, sodass auf einfache Weise das Deionisierharz 19 gegebenenfalls gewechselt oder nachgefüllt werden kann.

Durch eine derartige Befestigung des Behälters 22, welche ebenso als schwimmend bezeichnet werden kann, ist gewährleistet, dass die Verbindung vom Innenraum 24 des Ausgleichsbehälters 20 zu der Leitung 21 stets frei zugänglich ist, sodass zwischen Ausgleichsbehälter 20 und Kühlkreislauf 16 eine permanente Verbindung vorhanden ist. Ebenso ist dadurch sichergestellt, dass das Deionisierharz 19 ständig in das Kühlmittel 17 zumindest teilweise oder vollständig eingetaucht ist, sodass das gesamte im Behälter 22 befindliche Deionisierharz 19 ausgenutzt wird. Dazu ist die Größe des Ausgleichsbehälters 20 entsprechend angepasst, sodass auch noch eine Veränderung des Volumens des Kühlmittels 17 im Ausgleichsbehälter 20 ausgeglichen werden kann.

Der Behälter 22 ist erfindungsgemäß aus VE-wasserbeständigen und kühlmittelbeständigen Materialien wie Polyethylen (PE) oder Polypropylen (PP) gefertigt, welche für das Kühlmittel 17 durchlässig sind. Beispielsweise ist das Material durch ein Gewebe oder Geflecht mit einer entsprechenden Maschenweite gebildet, sodass das Deionisierharz 19 den Behälter 22 nicht verlässt und das Kühlmittel 17 den Behälter 22 durchströmen kann. Ebenso ist es möglich, dass der Behälter 22 kleine Löcher aufweist, durch die das Kühlmittel 17 in den Behälter 22 gelangt, wobei das Deionisierharz 19 stets im Behälter 22 verbleibt. Durch einen derartigen Aufbau kann das Deionisierharz 19 einfach, ohne großen Aufwand, und kostengünstig in das Kühlsystem 13 integriert werden, da keine hohen Anforderungen, wie Druckbeständigkeit, an den Behälter 22 gestellt sind.

Somit absorbiert das Deionisierharz 19 die elektrisch leitfähigen Ionen des im Innenraum 24 des Behälters 22 annähernd stehenden Kühlmittels 17, sodass dieses eine sehr geringe Konzentration an Ionen aufweist bzw. die Leitfähigkeit sehr gering ist. Dies erfolgt durch Diffusionsvorgänge zwischen dem Deionisierharz 19 und dem Kühlmittel 17.

Das Kühlmittel 17 im Kühlkreislauf 16 weist hingegen eine hohe Konzentration an Ionen auf, da ständig elektrisch leitfähige Ionen von den Zellen 11 des Stacks 12 aufgenommen werden. Im Wesentlichen gelangt das Kühlmittel 17 im Kühlkreislauf 16 kaum in den Ausgleichsbehälter 20, da dieses durch die Pumpe 15 ständig im Kühlkreislauf 16 umgewälzt wird. Jedoch dient der Ausgleichsbehälter 20 selbstverständlich auch dazu, das entsprechend erhöhte Volumen des Kühlmittels 17 bei dessen Erwärmung auszugleichen. Sollte für diesen Zweck das Volumen des Ausgleichsbehälters 20 nicht ausreichen, weist der Ausgleichsbehälter 20 eine Überdrucksicherungseinrichtung 27 oder eine Belüftungseinrichtung, sprich ein Überdruck- bzw. Überströmventil, auf. Durch die hohen Konzentrationsunterschiede zwischen dem Kühlmittel 17 im Ausgleichsbehälter 20 und dem Kühlmittel 17 im Kühlkreislauf 16 resultieren Diffusionsvorgänge. Diese bewirken, dass die Konzentrationsunterschiede über die Leitung 21 ausgeglichen werden und somit die Leitfähigkeit des Kühlmittels 17, auch im Kühlkreislauf 16, auf den erforderlichen Wert gesenkt wird. Begünstigt werden die Diffusionsvorgänge durch das Druckgefälle zwischen einer Druckseite 28 und einer Saugseite 29 der Pumpe 15, indem der Ausgleichsbehälter 20 an der Saugseite 29 mit dem Kühlkreislauf 16 verbunden ist. Somit herrscht zumindest ein geringfügiger Unterdruck an der Saugseite 29, welcher mit dem Kühlmittel 17 aus dem Ausgleichsbehälter 20 ausgeglichen wird. Daraus resultiert, dass sich das Kühlmittel 17 mit einer sehr geringen Konzentration von Ionen aus dem Ausgleichsbehälter 20 mit dem Kühlmittel 17 mit einer höheren Konzentration von Ionen im Kühlkreislauf 16 vermischt, wodurch das Senken der Leitfähigkeit verbessert wird. Hierbei ergibt sich das erforderliche Druckgefälle durch den Druckverlust im Stack 12.

Zum Senken der Leitfähigkeit des Kühlmittels 17 hat die Länge sowie der Querschnitt der Leitung 21 in praktischen Anwendungen meist keinen wesentlichen Einfluss. Beispielsweise beträgt die Länge der Leitung 21 10 cm bis 50 cm bei einem Innen-Durchmesser von etwa 10 mm bis 20 mm.

Der zeitliche Faktor für die Diffusionsvorgänge bzw. dem Ausgleich der Konzentrationsunterschiede hat im Wesentlichen keinen Einfluss, da erst nach etwa einem Monat, wenn kein Deionisierharz 19 eingesetzt wird, die Leitfähigkeit des Kühlmittels 17 einen Grenzwert (beispielsweise 50 µS/cm) überschreitet. Der Einsatz des Deionisierharzes 19 bewirkt somit, dass kontinuierlich die Leitfähigkeit des Kühlmittels 17 gering gehalten wird und das Kühlmittel 17 erst nach einigen Jahren ausgetauscht werden muss.

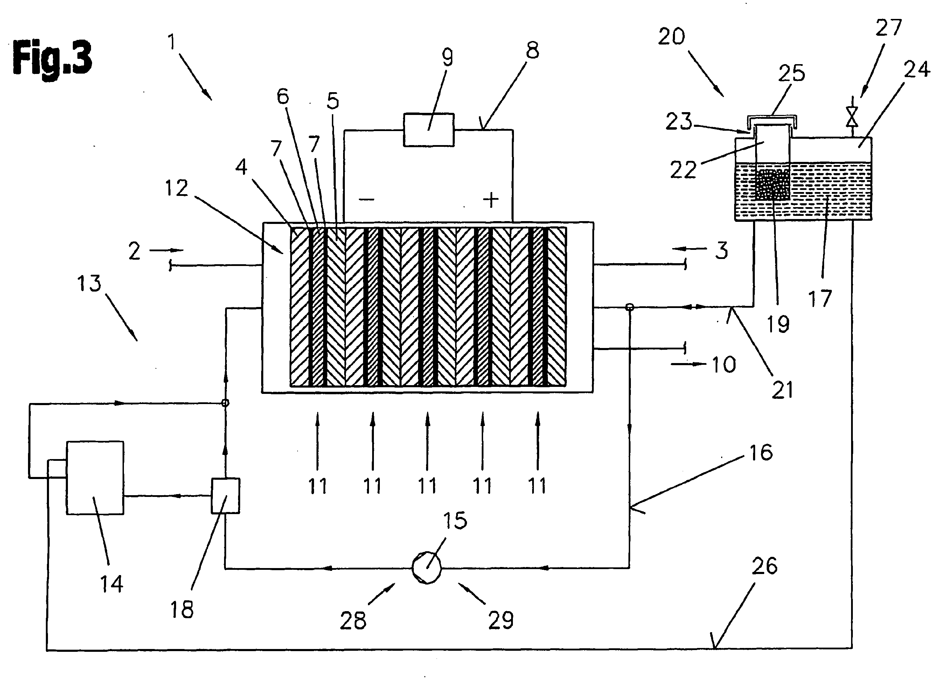

Der Konzentrationsausgleich kann durch die Verwendung einer Entgasungsleitung 26 verstärkt werden, wie in Fig. 3 schematisch dargestellt. Die Entgasungsleitung 26 verbindet den Kühler 14 mit dem Ausgleichsbehälter 20 und hat die Aufgabe, die im Kühlkreislauf 16 angesammelten Reaktionsgase zu entfernen. Die Reaktionsgase, Wasserstoff 2 und Sauerstoff 3 gelangen in den Kühlkreislauf 16, da eine absolute Dichtheit der Zellen 11 nicht gegeben ist bzw. werden als Produkt von Nebenreaktionen im Kühlkreislauf 16 gebildet. Die Reaktionsgase sammeln sich bevorzugt am Ausgang des Kühlers 14 an, wo sie gemeinsam mit einem Teil des Kühlmittels 17 aus dem Kühlkreislauf 16 über die Entgasungsleitung 26 in den Innenraum 24 des Ausgleichsbehälters 20 befördert werden. Dieser Teilstrom über die Entgasungsleitung 26 in den Ausgleichsbehälter 20 beträgt etwa fünf bis zehn Prozent des Stromes im Kühlkreislauf 16. Wird das dabei im Ausgleichsbehälter 20 angesammelte Gasvolumen zu groß bzw. der Druck der Reaktionsgase zu hoch, werden die Reaktionsgase durch die Überdrucksicherungseinrichtung 27 bzw. das Überdruck- bzw. Überströmventil aus dem Ausgleichsbehälter 20 ausgeschieden.

Die Entgasungsleitung 26 verstärkt nun insofern den Konzentrationsausgleich zwischen dem Kühlmittel 17 im Ausgleichsbehälter 20 und dem Kühlmittel 17 im Kühlkreislauf 16, da ein sogenannter Sekundärkreislauf entsteht. Dieser Sekundärkreislauf wird demnach aus der Entgasungsleitung 26, dem Ausgleichsbehälter 20 mit dem Deionisierharz 19 und der Leitung 21 gebildet. Über den Sekundärkreislauf wird das Kühlmittel. 17 aus dem Kühlkreislauf 16, welches eine hohe Konzentration an Ionen aufweist, mit dem Kühlmittel 17 im Ausgleichsbehälter 20, welches eine geringe Konzentration an Ionen aufweist, vermischt. Ebenso gelangt nun das vermischte Kühlmittel 17 im Ausgleichsbehälter 20 automatisch über die Leitung 21 in den Kühlkreislauf 16, sodass eine Umwälzung erfolgt und die Leitfähigkeit gesenkt wird. Somit werden zusätzlich zu den Diffusionsvorgängen, insbesondere über die Leitung 21, zum Ausgleich der Konzentrationsunterschiede über die Entgasungsleitung 26 die Kühlmittel 17 mit den unterschiedlichen Konzentrationen an Ionen vermischt, was den Konzentrationsausgleich verstärkt. Da der Sekundärkreislauf im Wesentlichen unabhängig vom Kühlkreislauf 16 ist, wird der Strömungswiderstand im Kühlkreislauf 16 nicht erhöht. Daraus folgt, dass die Leistung der Pumpe 15 nicht erhöht werden muss um die Kühlung des Stacks 12 zu gewährleisten, wodurch die Nettoenergieproduktion des Brennstoffzellensystems beibehalten wird.

Dass der Wirkungsgrad und der Strömungswiderstand durch den Behälter 22 nicht verschlechtert werden, liegt auch daran, dass der Behälter 22 aus Gewebe bzw. aus einem Geflecht im Wesentlichen flexibel ist. Dadurch kann sich der Behälter 22 im Wesentlichen im Innenraum 24 des Ausgleichsbehälters 20 frei bewegen, wodurch dieser keinen bzw. nur einen unwesentlichen Einfluss auf den Strömungswiderstand im Sekundärkreis hat. Selbstverständlich ist dabei stets gewährleistet, dass das Deionisierharz 19 vollständig oder zumindest teilweise in das Kühlmittel 17 getaucht ist.

## Patentansprüche

1. Kühlsystem (13) für eine Brennstoffzelle (1) mit zumindest einem Kühler (14), einem Thermostat (18), einer Pumpe (15) zur Beförderung eines Kühlmittels (17) in einem Kühlkreislauf (16), und mit einem Ausgleichsbehälter (20), wobei zur Reduktion der elektrischen Leitfähigkeit des Kühlmittels (17) ein Deionisier - harz (19) vorgesehen ist, welches in dem Ausgleichsbehälter (20) angeordnet ist, welcher Ausgleicbsbehalter (20) über zumindest eine Leitung (21) mit dem Kühlkreislauf (16) verbunden ist, **dadurch gekennzeichnet, dass** das Deionisierharz (19) in einem Behälter (22) aus einem für das Kühlmittel (17) durchlässigen Material in einem Innenraum (24) des Ausgleichsbehälters (20) derart angeordnet ist, dass das Deionisierharz (19) zumindest teilweise in das Kühlmittel (17) getaucht ist, die Leitung (21), welche den Ausgleichsbehälter (20) und den Kühlkreislauf (16) verbindet, frei zugänglich ist, sodass zwischen Ausgleichsbehälter (20) und Kühlkreislauf (16) eine permanente Verbindung vorhanden ist, sodass das Deionisierharz (19) die elektrische Leitfähigkeit des Kühlmittels (17) durch Diffusionsvorgänge zwischen dem Deionisierharz (19) und dem Kühlmittel (17) reduziert.

2. Kühlsystem (13) nach Anspruch 1, **dadurch gekennzeichnet, dass** die Leitung (21) an einer Saugseite (29) der Pumpe (15) des Kühlkreislaufes (16) angeschlossen ist.

3. Kühlsystem (13) nach Anspruch 1 oder 2, **dadurch gekennzeichnet, dass** der Behälter (22) durch einen Schraubverschluss (25) einer Einfüllöffnung (23) des Ausgleichsbehälters (20) befestigt ist.

4. Kühlsystem (13) nach einem der Ansprüche 1 bis 3, **dadurch gekennzeichnet, dass** zumindest eine Entgasungsleitung (26) vorgesehen ist, welche den kühlkreislauf (16) mit dem Ausgleichsbehälter (20) verbindet,

5. Kühlsystem (13) nach Anspruch 4, dadurch gekennzichnet, dass zumindest eine Entgasungsleitung (26) den Kühler (14) mit dem Ausgleichsbehälter (20) verbindet.

6. Kühlsystem (13) nach Anspruch 4 oder 5, **dadurch gekennzeichnet, dass** die zumindest eine Entgasungsleitung (26) zusammen mit der Leitung (21) und dem Ausgleichsbehälter (20) einen Sekundärkreislauf bildet.

7. kühlsystem (13) nach einem der Ansprüche 1 bis 6, **dadurch gekennzeichnet, dass** der Ausgleichsbehälter (20) mit einer Überdrucksicherrungseinrichtung (27) oder Belüftungseinrichtung ausgestattet ist.

8. kühlsystem (13) nach Anspruch 7, **dadurch gekennzeichnet, dass** die Überdrucksicherungseinrichtung (27) durch ein Überdruckventil gebildet ist.

9. Kühlsystem (13) nach einem der Anspruche 1 bis 8, **dadurch gekennzeichnet, dass** das Deionisierharz (19) aus basischen Anionenharzen und/oder Mischbettharzen besteht.

10. kühlsystem (13) nach einem der Ansprüche 1 bis 9, **dadurch gekennzeichnet, dass** der Behälters (22) aus einem gegenüber dem Kühlmittel (17) beständigen Material, insbesondere Polypropylen oder polyethylen hergestellt ist.

## Claims

1. A cooling system (13) for a fuel cell (1), comprising at least one cooler (14), a thermostat (18), a pump (15) for conveying a coolant (17) in a cooling circuit (16), and an equalization container (20), wherein for reducing the electric conductivity of the coolant (17), a deionizing resin (19) is provided which is located in the equalization container (20), the equalization container (20) being connected to the cooling circuit (16) via at least one duct (21), **characterized in that** the deionizing resin (19) is arranged in a container (22) of a material permeable to the coolant (17) in an inner space (24) of the equalizing container (20) such that the deionizing resin (19) is at least partially immersed in the coolant (17), and the duct (21) which connects the equalization container (20) and the cooling circuit (16) is freely accessible, so that between the equalization container (20) and cooling circuit (16) a permanent connection is present, so that the deionizing resin (19) reduces the electrical conductivity of the coolant (17) by diffusion processes between the deionizing resin (19) and the coolant (17).

2. The cooling system (13) according to claim 1, **characterized in that** the duct (21) is connected to a suction side (29) of the pump (15) of the cooling circuit (16).

3. The cooling system (13) according to claim 1 or 2, **characterized in that** the container (22) is fastened by means of a screw-type closure (25) of a filler opening (23) of the equalization container (20).

4. The cooling system (13) according to any one of claims 1 to 3, **characterized in that** at least one degassing duct (26) is provided which connects the cooling circuit (16) to the equalization container (20).

5. The cooling system (13) according to claim 4, **characterized in that** at least one degassing duct (26) connects the cooler (14) to the equalization container (20).

6. The cooling system (13) according to claim 4 or 5, **characterized in that** the at least one degassing duct (26) forms a secondary circuit in combination with the duct (21) and the equalization container (20).

7. The cooling system (13) according to any one of claims 1 to 6, **characterized in that** the equalization container (20) is equipped with a pressure relief means (27) or a venting means.

8. The cooling system (13) according to claim 7, **characterized in that** the pressure relief means (27) is formed by a pressure relief valve.

9. The cooling system (13) according to any one of claims 1 to 8, **characterized in that** the deionizing resin (19) consists of basic anion resins and/or mixed bed resins.

10. The cooling system (13) according to any one of claims 1 to 9, **characterized in that** the container (22) is made of a material which is resistant to the coolant (17), in particular of polypropylene or polyethylene.

## Revendications

1. Système de refroidissement (13) pour une pile à combustible (1), comprenant au moins un dispositif de refroidissement (14), un thermostat (18), une pompe (15) pour acheminer un agent réfrigérant (17) dans un circuit de refroidissement (16) et un réservoir de compensation (20), dans lequel, pour réduire la conductivité électrique de l'agent réfrigérant (17), on prévoit une résine désionisante (19), qui est agencée dans le réservoir de compensation (20), lequel réservoir de compensation (20) est relié via au moins un conduit (21) au circuit de refroidissement (16), **caractérisé en ce que** la résine désionisante (19) est agencée dans un récipient (22) constitué d'un matériau perméable à l'agent réfrigérant (17), dans un espace interne (24) du réservoir de compensation (20), de sorte que la résine désionisante (19) soit plongée au moins partiellement dans l'agent réfrigérant (17), **en ce que** le conduit (21), qui relie le réservoir de compensation (20) et le circuit de refroidissement (16), est librement accessible de sorte qu'entre le réservoir de compensation (20) et le circuit de refroidissement (16), il existe une liaison permanente telle que la résine désionisante (19) réduise la conductivité électrique de l'agent réfrigérant (17) par des opérations de diffusion entre la résine désionisante (19) et l'agent réfrigérant (17).

2. Système de refroidissement (13) selon la revendication 1, **caractérisé en ce que** le conduit (21) est raccordé à un côté d'aspiration (29) de la pompe (15) du circuit de refroidissement (16).

3. Système de refroidissement (13) selon la revendication 1 ou 2, **caractérisé en ce que** le récipient (22) est fixée par une fermeture à vis (25) d'une ouverture de remplissage (23) du réservoir de compensation (20).

4. Système de refroidissement (13) selon l'une quelconque des revendications 1 à 3, **caractérisé en ce que** l'on prévoit au moins un conduit de dégazage (26) qui relie le circuit de refroidissement (16) au réservoir de compensation (20).

5. Système de refroidissement (13) selon la revendication 4, **caractérisé en ce qu'**au moins un conduit de dégazage (26) relie le dispositif de refroidissement (14) au réservoir de compensation (20).

6. Système de refroidissement (13) selon la revendication 4 ou 5, **caractérisé en ce que** le au moins un conduit de dégazage (26), conjointement avec le conduit (21) et le réservoir de compensation (20), forme un circuit secondaire.

7. Système de refroidissement (13) selon l'une quelconque des revendications 1 à 6, **caractérisé en ce que** le réservoir de compensation (20) est équipé d'un dispositif de sécurité anti-surpression (27) ou d'un dispositif de ventilation.

8. Système de refroidissement (13) selon la revendication 7, **caractérisé en ce que**
le dispositif de sécurité anti-surpression (27) est formé par une soupape de surpression.

9. Système de refroidissement (13) selon l'une quelconque des revendications 1 à 8, **caractérisé en ce que** la résine désionisante (19) est constituée de résines anioniques basiques et/ou de résines à lit mixte.

10. Système de refroidissement (13) selon l'une quelconque des revendications 1 à 9, **caractérisé en ce que** le récipient (22) est fabriqué à partir d'un matériau (17) résistant à l'agent réfrigérant, en particulier de polypropylène ou de polyéthylène.
